# FASCICULE DE BREVET EUROPEEN

(11) **EP 3 659 966 B1**
(45) Date de publication et mention de la délivrance du brevet: **09.06.2021**
(21) Numéro de dépôt: 19210660.7
(22) Date de dépôt: 21.11.2019
(51) Int. Cl.: C01B 3/38, C01B 3/48, C01B 3/56, B01J 8/06

(54) **PROCÉDÉ DE PRODUCTION D'HYDROGÈNE PAR REFORMAGE À LA VAPEUR ET CONVERSION DE CO**
VERFAHREN ZUR WASSERSTOFFERZEUGUNG DURCH DAMPFREFORMIERUNG UND KOHLENSTOFFUMWANDLUNG
METHOD FOR PRODUCING HYDROGEN BY STEAM REFORMING AND CO CONVERSION

(30) Priorité: 27.11.2018 FR 1871927
(43) Date de publication de la demande: 03.06.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BASIN, Marie, 78350 LES LOGES EN JOSAS (FR); GARY, Daniel, 78350 LES LOGES EN JOSAS (FR); TADIELLO, Jean-Philippe, 60439 FRANKFURT/MAIN (DE)
(74) Mandataire: Air Liquide

(56) Documents cités:
- EP-A1- 0 985 635
- EP-A2- 0 578 218
- WO-A1-02/02220
- US-A1- 2010 176 346
- US-A1- 2016 332 876
- Walter Boll ET AL: "Gas Production, 3. Gas Treating, 2. Carbon Monoxide Shift Conversion" In: "Ullmann's Encyclopedia of Industrial Chemistry", 15 octobre 2011 (2011-10-15), Wiley-VCH Verlag, Weinheim, XP055046055, ISBN: 978-3-52-730673-2 pages 1-8, DOI: 10.1002/14356007.o12_o02, * 2.3. Clean Gas Shift Convrsion *

## Description

La présente invention concerne un procédé pour la production d'hydrogène à partir d'une source d'hydrocarbures légers dans lequel un gaz de synthèse est généré par reformage de méthane à la vapeur comprenant une étape de désulfuration des hydrocarbures à reformer suivie d'une étape optionnelle de pré-reformage, une étape de reformage à la vapeur des hydrocarbures désulfurés et pré reformés, l'hydrogène étant produit à partir du gaz de synthèse par enrichissement en hydrogène du gaz de synthèse par conversion du monoxyde de carbone et purification dans une unité d'adsorption par cycles de pression pour obtenir un produit H₂ pur et un mélange gazeux résiduaire contenant CH₄, CO, H₂ et CO₂.

Le gaz de synthèse (aussi appelé syngas) est encore actuellement majoritairement produit par reformage à la vapeur (steam methane reforming en langue anglaise) de méthane. La charge destinée à l'alimentation du reformeur est constituée à partir d'hydrocarbures gazeux légers (par gazeux, on entend gazeux ou liquides vaporisés); il s'agit le plus souvent de gaz naturel, de méthane, de propane, de butane, de gaz naturel, de naphta, ainsi que d'hydrocarbures légers issus de certains résiduaires de raffinerie utilisés seuls ou en association, - dans le contexte de l'invention, l'expression "hydrocarbures légers" inclura donc les résiduaires de raffinerie utilisés comme source pour le reformage. La charge sera généralement prétraitée, c'est à dire désulfurée et si besoin pré reformée - pour transformer en méthane les hydrocarbures plus lourds avant l'étape de reformage à la vapeur en tant que telle. A l'issue du reformage on obtient un gaz de synthèse dont les deux constituants principaux sont l'hydrogène et le monoxyde de carbone, mais contenant aussi du dioxyde de carbone, de la vapeur en excès, du méthane résiduel et des impuretés. Une petite partie des hydrocarbures constituant la charge sert souvent en tant que combustible primaire pour le reformage, on distingue donc le gaz alimentant le procédé et le gaz combustible.

Dans un but de simplification, et considérant que la source d'hydrocarbures gazeux légers la plus couramment utilisée est le gaz naturel (ou GN), on parlera, non pas d'hydrocarbures mais de gaz naturel; on distingue donc dans la suite du texte le gaz naturel procédé (aussi appelé GN procédé) et le gaz naturel combustible (aussi appelé GN combustible) étant entendu que ce qui est décrit s'applique de la même manière aux autres hydrocarbures légers cités ci-avant.

Le procédé de reformage comprend en fonction de la composition du gaz naturel les étapes 1 à 3 suivantes (cf. US2016/332876 A1 par exemple):
- une étape 1 de désulfurisation à chaud durant laquelle après une préchauffe à 300-400°C du gaz naturel procédé, tous les composés soufrés contenus dans le gaz naturel sont transformés en H₂S par un procédé catalytique dans un réacteur d'hydrogénation, l'H₂S produit étant ensuite capté sur un lit d'adsorbant;
- une étape optionnelle 2 de pré-reformage durant laquelle les hydrocarbures plus lourds que le méthane entrent à une température de 450-550°C dans un réacteur adiabatique où ils sont transformés sous l'action de vapeur d'eau présente et en présence d'un catalyseur de pré-reformage en un mélange CH₄, H₂, CO et CO₂;
- une étape 3 de reformage qui consiste à faire réagir à haute température, de l'ordre de 850-950°C, le méthane (CH₄) avec la vapeur d'eau contenue dans la charge, en présence d'un catalyseur de reformage - la réaction ayant lieu dans des réacteurs tubulaires installés dans le four d'un reformeur à la vapeur - pour produire de l'H₂, du CO et du CO₂, constituants principaux du gaz de synthèse.

Les étapes ultérieures sont des étapes de traitement du gaz de synthèse durant lesquelles sa composition évolue jusqu'à obtention du produit final recherché.

C'est ainsi que le procédé de traitement du gaz de synthèse pour une production d'hydrogène comprendra tout ou partie des étapes 4 à 6 suivantes :
- une étape 4 de conversion (appelée aussi déplacement ou réaction de gaz à l'eau) du monoxyde de carbone contenu dans le syngas et de vapeur d'eau en mélange hydrogène et dioxyde de carbone ; cette conversion est réalisée en présence d'un catalyseur dit « de shift » (selon la dénomination anglaise de la réaction de conversion) dans un réacteur adiabatique ayant une température d'entrée comprise entre 200°C et 360°C selon le catalyseur ; cette étape est mise en œuvre lorsque la composition du gaz de synthèse recherchée le nécessite, notamment quand le produit principal final requis est l'hydrogène.
- une étape 5 de refroidissement/condensation durant laquelle le gaz de synthèse enrichi en H₂ et CO₂ est refroidi dans plusieurs échangeurs successifs, et l'eau en excès est condensée et séparée de celui-ci ;
- une étape 6 de purification du gaz de synthèse dans une unité d'adsorption par cycles de pression (Pressure Swing Adsorption en anglais ou PSA) pour obtenir de l'hydrogène à plus de 99.99% de pureté, - dit hydrogène pur - et un mélange gazeux résiduaire contenant CH₄, CO, H₂ et CO₂ dénommé aussi par simplification « résiduaire PSA » ; à noter que ce résiduaire PSA a un pouvoir calorifique suffisant pour être recyclé dans les brûleurs du four du reformeur de l'étape 3 de reformage; un apport de combustible additionnel est fourni par le GN combustible, à la fois pour compléter l'apport en énergie du résiduaire, et aussi pour assurer une flexibilité d'opération.

La réaction de conversion de CO (réaction de gaz à l'eau) de l'étape 4 est une réaction catalytique et équilibrée. Cette réaction est exothermique et la conversion du CO est favorisée à basse température. Classiquement, cette réaction est mise en œuvre dans un réacteur catalytique adiabatique à lit fixe.

En fonction de sa composition, le gaz de synthèse en sortie du réacteur de conversion est à une température plus élevée que sa température d'entrée d'au moins 50°C voire 150°C ou plus; cette augmentation de la température due à la réaction de conversion qui intervient dans le réacteur représente en même temps une perte de conversion de l'ordre de 10 à 15% par rapport à une opération qui serait isotherme. Un réacteur gardant la température plus stable - refroidi, idéalement isotherme - permettrait d'augmenter la conversion, et donc permettrait, pour une production d'hydrogène donnée, de diminuer la consommation de gaz naturel procédé. D'un autre côté, augmenter la conversion dans ce réacteur conduirait à réduire le pouvoir calorifique des résidus de PSA de l'étape 6 recyclés comme combustible secondaire ce qui nécessiterait de compenser en augmentant l'apport de GN combustible.

Il y a donc un besoin pour un procédé qui permette à production finale donnée, de réduire notablement la consommation globale des hydrocarbures gazeux source (gaz naturel), c'est à dire qui permette de réduire la consommation de GN combustible en même temps que l'on réduit la consommation de GN procédé, de sorte à obtenir in fine une réduction de la consommation globale de GN substantielle.

L'utilisation de réacteurs isothermes ou pseudo-isothermes pour la mise en œuvre de réactions catalytiques exothermiques est connue.

US 7,981,271 B2 divulgue ainsi un réacteur radial pseudo-isotherme utilisé en particulier pour la synthèse d'ammoniac dans lequel une pluralité d'échangeurs sous forme de plaques rectangulaires sont immergés dans un lit catalytique ; le flux des réactifs froids joue le rôle de fluide caloporteur, et une fois préchauffés dans la pluralité d'échangeurs, les réactifs parcourent radialement le lit catalytique.

US 2010/0176346 A1 divulgue quant à lui un réacteur isotherme comprenant des tubes insérés dans une calandre. La calandre contient de l'eau bouillante, les tubes sont divisés en deux sections : dans une première section circule le gaz sortant du reformage qui est refroidi par échange indirect avec l'eau bouillante tandis que dans la seconde section remplie de catalyseur, on réalise la réaction du gaz à l'eau. Cette seconde section est maintenue à température quasi constante par refroidissement indirect avec l'eau bouillante dont au moins une partie se retrouve transformée en vapeur.

US 2017/0021322 A1 divulgue un réacteur pseudo-isotherme pour la mise en œuvre de réactions exothermiques telles que la méthanation, la synthèse de méthanol ou de formaldéhyde. Ce réacteur comprend deux zones catalytiques permettant la conversion des réactifs en deux étapes. Ces deux zones catalytiques sont immergées dans la même calandre où elles échangent de la chaleur indirectement avec de l'eau bouillante ou tout autre fluide présentant un point d'ébullition approprié selon la pression de fonctionnement de l'enceinte.

Ces différents documents enseignent d'utiliser l'exothermicité d'une réaction, soit pour préchauffer les réactifs de la réaction (US 7,981,271), soit pour générer de la vapeur (US 2010/0176346 - US 2017/0021322). Le document WO 02/02220 A1 quant à lui divulgue l'utilisation de l'exothermicité de la réaction de conversion de gaz à l'eau pour préchauffer l'air employé dans la combustion permettant de chauffer un reformeur.

Cependant, en augmentant la température des réactifs entrant dans le réacteur, l'enseignement de US 7,981,271 B2 va à l'encontre des besoins du procédé auquel s'applique l'invention qui nécessite de refroidir le gaz de synthèse entre les étapes 3 et 4 ; quant à US 2017/0021322 A1 et US 2010/0176346 A1, ils utilisent la chaleur de la réaction de conversion de gaz à l'eau pour chauffer de l'eau en générant de la vapeur.

Les performances de réacteurs de conversion de l'art antérieur utilisés pour la réaction du gaz à l'eau et intégrés dans le procédé de reformage à la vapeur conformément à l'art antérieur sont présentées dans [Tableau 1] ci-après dans le texte; elles montrent que:
- la consommation de GN procédé diminue, mais
- la consommation conjointe de GN combustible augmente,
- l'économie globale en hydrocarbures qui en découle est limitée avec des inconvénients en termes environnemental et économique, et aussi de temps de retour sur investissement.

En cela, les solutions de l'art antérieur ne résolvent pas de façon satisfaisante le problème posé qui est de diminuer de façon substantielle la consommation de gaz naturel, à la fois GN procédé et GN combustible, à production finale donnée.

L'invention a donc pour objectif de réduire significativement la consommation globale de gaz naturel du procédé, cet objectif est atteint en diminuant à la fois la consommation de GN procédé et la consommation de GN combustible, la première, via l'utilisation d'un réacteur refroidi pour la conversion du CO, et la seconde en utilisant la chaleur - produite par la réaction de conversion du CO et récupérée dans le réacteur lors de ce refroidissement - comme apport de chaleur se substituant partiellement au GN combustible pour le chauffage de la charge d'alimentation du reformage. Ainsi, la solution de l'invention permettra, pour une production finale inchangée, de diminuer la consommation globale de gaz naturel de l'installation.

Pour cela, l'invention a pour objet un procédé de production d'hydrogène à partir d'une source d'hydrocarbures légers comprenant au moins les étapes suivantes:
Etape (a): génération d'un gaz de synthèse par reformage à la vapeur à partir d'une source desdits hydrocarbures légers comprenant elle-même au moins une Etape (a1) de désulfuration desdits hydrocarbures à reformer, une Etape (a2) optionnelle de pré reformage des hydrocarbures désulfurés, une Etape (a3) de reformage à la vapeur des hydrocarbures désulfurés et optionnellement pré reformés dans des réacteurs tubulaires installés dans le four d'un reformeur chauffé par des brûleurs alimentés en combustible par au moins du gaz combustible secondaire comprenant tout ou partie du mélange gazeux résiduaire produit lors de l'étape de production d'hydrogène (b) du procédé et du combustible primaire prélevé préférentiellement sur la source d'hydrocarbures légers;
Etape (b): production d'hydrogène à partir du gaz de synthèse généré lors de l'étape (a), comprenant elle-même au moins une Etape (b1) d'enrichissement en hydrogène du gaz de synthèse par conversion du monoxyde de carbone selon la réaction exothermique de conversion CO + H₂O → CO₂ + H₂, une Etape (b2) de purification du gaz de synthèse dans une unité d'adsorption par cycles de pression pour obtenir un produit H₂ pur et un mélange gazeux résiduaire contenant CH₄, CO, H₂ et CO₂,
caractérisé en ce que la réaction de conversion de l'étape (b1) est mise en œuvre dans un réacteur de conversion refroidi dans lequel une partie de la chaleur produite lors de l'étape (b1) est transférée par échange de chaleur indirect - au sein du réacteur - avec un premier fluide ainsi préchauffé préalablement à son utilisation dans l'étape (a) de génération du gaz de synthèse, et en ce que le gaz de synthèse enrichi en hydrogène quittant le réacteur de conversion est refroidi par échange de chaleur indirect avec un second fluide préalablement à son utilisation dans l'étape (a).

Le procédé de l'invention peut présenter une ou plusieurs des variantes suivantes:
- le gaz de synthèse, entrant à une température T_{E} dans le réacteur de conversion, le gaz de synthèse enrichi en hydrogène quitte le réacteur de convection refroidi à une température Ts inférieure à T_{E} + 40°C, de préférence inférieure à T_{E} + 30°C, de préférence inférieure à T_{E} +10°C;
- le premier fluide gazeux à préchauffer est le mélange gazeux résiduaire alimentant les brûleurs du reformeur et le second fluide gazeux à préchauffer est constitué par les hydrocarbures légers à reformer;
- le premier fluide gazeux à préchauffer est constitué par les hydrocarbures légers à reformer et le second fluide gazeux à préchauffer est le mélange gazeux résiduaire alimentant les brûleurs du reformeur;
- pour une production d'hydrogène et des conditions opératoires similaires par ailleurs, la consommation totale en hydrocarbures légers est diminuée d'au moins 1%, de préférence d'au moins 2%, pouvant atteindre 3 % par rapport à un procédé utilisant un réacteur de conversion adiabatique ; en d'autres termes, en fournissant une quantité totale d'hydrocarbures légers diminuée d'au moins 1%, de préférence d'au moins 2%, et jusqu'à 3% au procédé de production d'hydrogène, et en maintenant les autres conditions opératoires similaires, le niveau de production d'hydrogène reste inchangé.

Selon un autre objet de l'invention, celle-ci concerne un réacteur de conversion refroidi pour la mise en œuvre d'un quelconque des procédés tels que définis ci-dessus, caractérisé en ce qu'il est équipé de moyens d'admission-du premier fluide à préchauffer préalablement à son utilisation dans l'étape (a), de moyens internes au réacteur pour la circulation dudit premier fluide à préchauffer et pour l'échange de chaleur avec le gaz de synthèse à refroidir et de moyens de sortie dudit premier fluide préchauffé.

Le réacteur peut présenter une ou plusieurs des variantes suivantes:
- le réacteur de conversion refroidi peut être du type plaques et ondes;
- le réacteur de conversion refroidi peut être du type tubes et calandre, et adapté pour la circulation du gaz de synthèse dans des tubes munis de catalyseur et pour la circulation dudit premier fluide à préchauffer dans la calandre;
- le réacteur de conversion refroidi peut être du type tubes et calandre, et adapté pour la circulation du gaz de synthèse dans la calandre munie de catalyseur et pour la circulation dudit premier fluide à préchauffer dans les tubes.

Selon encore un autre objet de l'invention, celle-ci concerne une installation apte à la mise en œuvre du procédé de l'invention selon l'un quelconque des modes décrits ci-avant, caractérisée en ce qu'elle est équipée d'un réacteur de conversion refroidi parmi ceux décrits ci-avant, et équipée de moyens aptes à véhiculer ledit premier fluide à préchauffer et à assurer son amenée au dit réacteur, ainsi que de moyens aptes à véhiculer ledit premier fluide préchauffé depuis sa sortie dudit réacteur de conversion jusqu'à son lieu d'utilisation au niveau du reformage.

D'autres caractéristiques et avantages de l'invention ressortiront de la description suivante de modes de réalisation - donnés à titre illustratif mais nullement limitatif -, faite en relation avec les figures annexées suivantes:

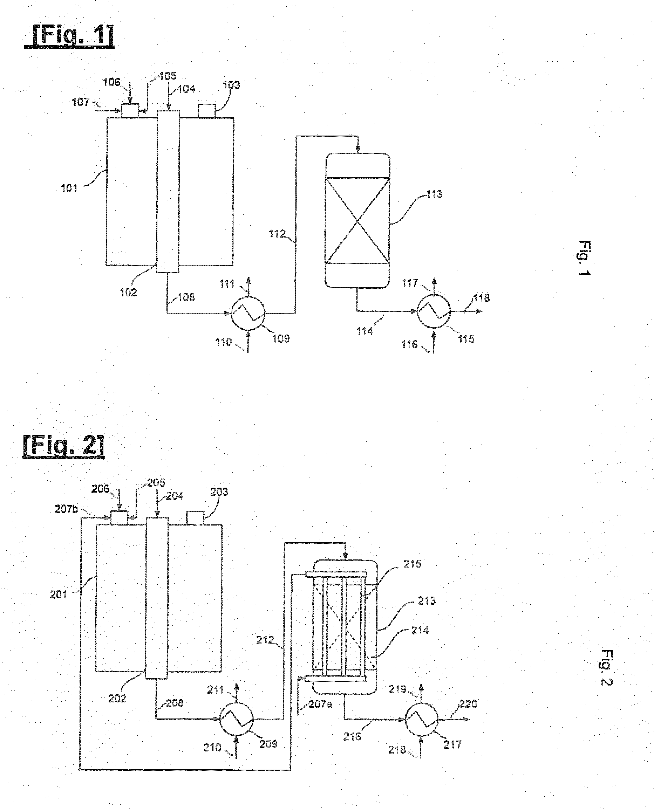

[Fig. 1] représente une vue schématique présentant un procédé de reformage de gaz naturel pour une production finale d'hydrogène par PSA, comprenant conventionnellement un réacteur adiabatique pour la réaction de gaz à l'eau.
[Fig 2] est une vue schématique présentant une première solution selon l'invention intégrant un réacteur refroidi pour la réaction de gaz à l'eau avec un procédé de reformage de gaz naturel pour une production finale d'hydrogène par PSA, dans laquelle ledit réacteur est refroidi via une source froide du procédé.

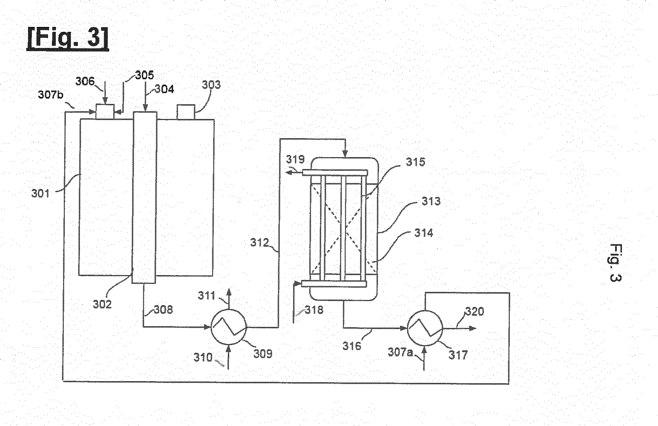

[Fig 3] est une vue schématique présentant une deuxième solution selon l'invention intégrant un réacteur refroidi pour la réaction de gaz à l'eau avec un procédé de reformage de gaz naturel pour une production finale d'hydrogène par PSA, dans laquelle ledit réacteur est refroidi via une source froide du procédé différente de la première solution.

Les performances comparées de procédés selon l'art antérieur et selon l'invention sont présentées dans les tableaux référencés ci- après.
[Tableau1] présente des comparaisons des performances respectives d'un procédé incluant un réacteur adiabatique pour la réaction du gaz à l'eau et d'un procédé incluant un réacteur refroidi pour cette même réaction selon l'art antérieur; les conditions étant globalement comparables par ailleurs
[Tableau 2] présente des comparaisons des performances respectives d'un procédé incluant un réacteur adiabatique pour la réaction du gaz à l'eau et d'un premier procédé selon l'invention incluant un réacteur refroidi pour cette même réaction; les conditions étant globalement comparables par ailleurs.
[Tableau 3] présente des comparaisons des performances respectives d'un procédé incluant un réacteur adiabatique pour la réaction du gaz à l'eau et d'un second procédé selon l'invention incluant un réacteur refroidi pour cette même réaction; les conditions étant globalement comparables par ailleurs.

L'hydrocarbure à reformer choisi est du gaz naturel (GN); d'autres sources d'hydrocarbures légers pouvant être reformés, conviendraient de la même manière, seules ou en association, y compris pour fournir le combustible primaire. Pour la numérotation des éléments et fluides sur les figures, on utilise des nombres à trois chiffres : celui des centaines correspond à la référence de la figure, les deux autres chiffres identifient l'élément ou le fluide référencé.

[Fig 1] représente l'intégration conventionnelle d'un réacteur adiabatique pour la réaction du gaz à l'eau dans le procédé de vaporeformage. Un mélange **104** composé de gaz naturel procédé préalablement désulfuré et pré-reformé et de vapeur d'eau alimente les tubes de reformage **102** présents dans le four de reformage **101** à une température comprise entre 620°C et 650°C; au contact d'un catalyseur de vaporeformage contenu dans les tubes, les hydrocarbures sont convertis et un gaz de synthèse **108** sort à l'extrémité basse des tubes où il est collecté. Lorsqu'il quitte le four, le gaz de synthèse est à une température de l'ordre de 900°C. Les brûleurs **103** du four, destinés à apporter aux tubes la chaleur nécessaire au reformage sont alimentés par de l'air de combustion **105** préchauffé, du gaz naturel combustible **106** et les résidus de l'unité PSA **107,** tous deux disponibles à température ambiante. Le gaz de synthèse **108** très chaud en sortie de reformage est refroidi jusqu'à une température de 360°C par échange de chaleur dans une chaudière **109** avec de l'eau **110** préchauffée produisant ainsi de la vapeur **111.** En sortie de chaudière, le gaz de synthèse refroidi **112** entre dans le réacteur de conversion adiabatique **113** à 360°C où il subit la réaction de gaz à l'eau ; une partie du monoxyde de carbone présent y est convertie catalytiquement - via de la vapeur d'eau présente - en dioxyde de carbone et hydrogène. Le gaz de synthèse **114** enrichi en H₂ et CO₂ quitte le réacteur de conversion **113** à une température plus élevée que sa température d'entrée, comprise entre 420°C et 430°C et cède ensuite de la chaleur par passage dans un échangeur de chaleur tubes-calandre **115** où il préchauffe du gaz naturel procédé **116** jusqu'à une température de 360°C. Le gaz naturel procédé préchauffé **117** alimente l'étape de désulfurisation du procédé (non représentée).

[Fig 2] représente présente une première solution d'intégration selon l'invention d'un réacteur refroidi pour la réaction du gaz à l'eau. Selon cette solution, un mélange **204** de gaz naturel procédé préalablement désulfuré et pré-reformé et de vapeur d'eau alimente les tubes **202** du four de reformage **201** à une température comprise entre 620°C et 650°C; au contact d'un catalyseur de vaporeformage contenu dans les tubes, les hydrocarbures sont convertis et un gaz de synthèse **208** sort à l'extrémité basse des tubes où il est collecté. En quittant le four, le gaz de synthèse **208** est à une température de l'ordre de 900°C, il est ensuite refroidi jusqu'à une température de 380°C dans une chaudière **209** alimentée en eau préchauffée **210** et produisant ainsi de la vapeur **211.** En sortie de chaudière, le gaz de synthèse refroidi **212** entre dans le réacteur refroidi **213** pour la réaction du gaz à l'eau; une partie du monoxyde de carbone présent dans le gaz est convertie en présence de vapeur d'eau et au contact du catalyseur placé en lit fixe **214** dans la calandre du réacteur **213,** la conversion produisant du dioxyde de carbone et de l'hydrogène. Un faisceau de tubes **215** placés au sein du lit catalytique permet la circulation des gaz résiduaires de PSA **207a** - l'unité PSA de purification d'hydrogène n'est pas représentée - en circulant dans les tubes **215,** les gaz **207a** sont préchauffés; les gaz préchauffés **207b** atteignent une température de 357°C. Le gaz de synthèse **216** enrichi en H₂ et CO₂ est simultanément refroidi et quitte le réacteur à une température de 380°C puis est utilisé comme source chaude dans un échangeur tubes-calandre **217** pour la préchauffe du gaz naturel procédés **218** jusqu'à une température de 360°C. Le gaz naturel procédé ainsi préchauffé **219** alimente l'étape de désulfurisation du procédé - non représentée.

Les brûleurs **203** du four de reformage **201** sont alimentés par de l'air de combustion **205** préchauffé, par du gaz naturel à température ambiante **206** et par les gaz résiduaires de l'unité PSA préchauffés **207b.**

[Fig 3] représente une deuxième solution intégrant selon l'invention un réacteur refroidi pour la réaction du gaz à l'eau à une production de gaz de synthèse par reformage à la vapeur de gaz naturel. Selon cette solution, un mélange **304** composé de gaz naturel procédé préalablement désulfuré - et si nécessaire pré reformé - et de vapeur d'eau, entre dans les tubes de reformage **302** du four de vaporeformage **301.** Le mélange gazeux entrant à une température comprise entre 500°C et 650°C est mis au contact d'un catalyseur de vaporeformage contenu dans les tubes, les hydrocarbures sont convertis, le gaz de synthèse **308** étant collecté en sortie des tubes ; le gaz **308** quittant le four de vaporeformage **301** est à une température comprise entre 850°C et 950°C. Il est refroidi jusqu'à une température comprise entre 250°C et 400°C dans une chaudière **309** alimentée en eau préchauffée **310** et produisant de la vapeur **311.** Le gaz de synthèse refroidi **312** entre alors dans le réacteur refroidi **313** pour la réaction du gaz à l'eau. Une partie du monoxyde de carbone présent est convertie en dioxyde de carbone et hydrogène au contact du catalyseur placé en lit fixe **314** dans la calandre. Un faisceau de tubes **315** est placé dans au sein du lit catalytique, un fluide de refroidissement y circule qui, selon ce second exemple de solution de l'invention, est constitué par le gaz naturel procédé **318** devant être préchauffé avant son entrée dans l'unité de désulfurisation. Le gaz naturel préchauffé **319** quitte le faisceau de tubes **315** à une température de 360°C et est envoyé vers l'unité de désulfuration (non représentée).

Après avoir cédé une partie de sa chaleur au gaz naturel **318,** le gaz de synthèse **316** sort du réacteur de shift **313** à une température de 380°C, il passe ensuite dans un échangeur de chaleur tubes-calandre **317** où il fournit de la chaleur au gaz résiduaire **307a** de l'unité PSA. Le résiduaire de PSA **307b** ainsi préchauffé jusqu'à une température de 360°C est envoyé aux brûleurs **303** du four de vaporeformage **301.** Les brûleurs **303** sont également alimentés par de l'air de combustion **305** pouvant être ou non préchauffé et par du gaz naturel combustible **306** à température ambiante.

Les réacteurs de conversion selon l'invention présentés sur [Fig 2] et sur [Fig 3] sont du type tubes et calandre avec le gaz de synthèse circulant dans la calandre contenant le catalyseur et le fluide gazeux à réchauffer circulant dans les tubes. Il aurait également été possible de faire appel à tout autre type d'échangeur, notamment de type plaques et ondes.

Le [Tableau 1] suivant représente une comparaison des performances respectives d'un procédé incluant un réacteur adiabatique pour la réaction du gaz à l'eau et d'un procédé incluant un réacteur isotherme pour cette même réaction, les conditions suivantes étant comparables par ailleurs :
- la production d'hydrogène est la même pour les deux configurations (5800 kmol/h) ;
- le gaz de synthèse entrant dans le réacteur de conversion a la même composition dans les deux cas : 49.3% H₂, 10.2% CO, 5.2% CO₂, 32.2% H₂O, 0.3% N₂, 2.8% CH₄;
- dans la première configuration, le gaz de synthèse entre dans le réacteur adiabatique (A) à une température de 360°C ; la température de sortie est alors de 428°C;
- dans la deuxième configuration, le réacteur isotherme (I) est quant à lui opéré à une température de 380°C.

**[Tableau 1]**

| | R.adiabat. A | R. isotherme I | Variation (I-A)/A |
|---|---|---|---|
| Conso GN procédé (kmol/h) | 1972 | 1929 | -2.2% |
| Conso GN combustible(kmol/h) | 296 | 327 | +10.6% |
| Conso GN total (kmol/h) | 2268 | 2257 | -0.5% |

Les performances reportées du réacteur isotherme résultent d'une simulation effectuée sur la base d'un réacteur de type tubes-calandre utilisant comme fluide de refroidissement de l'eau bouillante. La comparaison des performances respectives d'un procédé incluant un réacteur adiabatique pour la réaction du gaz à l'eau et d'un procédé incluant un réacteur isotherme (refroidi avec des températures d'entrée et de sortie du gaz naturel identiques) pour cette même réaction montre que :
- concernant le GN procédé : le réacteur isotherme offre une meilleure conversion, permettant une réduction de 2.2% de la quantité de GN procédé nécessaire pour la production des 5800 kmol/h d'hydrogène ;
- concernant le GN combustible : le résiduaire PSA (étape 6) - utilisé comme combustible secondaire - étant toutefois moins riche en CO que dans le cas du réacteur adiabatique, il aura donc un apport calorifique inférieur ce qui devra être compensé par ailleurs, d'où l'augmentation de la consommation de GN combustible de 10.6% ;
- concernant le GN total : il en résulte une économie globale de 0.5% de la consommation totale de gaz naturel dans un procédé utilisant un réacteur isotherme selon l'art antérieur par rapport au procédé standard utilisant un réacteur adiabatique.

Le [Tableau 2] représente les performances comparées du procédé de l'invention représenté sur [Fig 2] obtenues par simulation et du même procédé conventionnel mettant en œuvre un réacteur de shift adiabatique que dans [Tableau 1]. Dans les deux cas, on a la même production d'hydrogène de 5800 kmol/h d'hydrogène, et la même composition de gaz de synthèse entrant dans le réacteur : 49.3% H₂, 10.2% CO, 5.2% CO₂, 32.2% H₂O, 0.3% N₂, 2.8% CH₄

**[Tableau 2]**

| | R.adiabatique A | R.isotherme I | Variation (I-A)/A |
|---|---|---|---|
| Temp entrée T_{E} °C | 360 | 380 | |
| Temp sortie T_{S} °C | 428 | 380 | |
| Teneur en CO en sortie de réacteur | 3.33 | 2.29 | |
| Temp résiduaire PSA °C | 35 | 357 | |
| Conso GN procédé | 1972 | 1932 | -2.0% |
| Conso GN combustible | 296 | 261 | -11.8% |
| Conso totale GN | 2268 | 2193 | -3.3% |
| Rendement therm du four SMR (%) | 49.8 | 51.3 | |
| Production Vapeur en excès (t/h) | 73 | 60 | -18.0% |
| CO₂ émis (kmol/h) | 2479 | 2394 | -3.4% |

Les données présentées montrent que :
- le résiduaire PSA initialement à la température de 35°C est préchauffé dans le réacteur de conversion jusqu'à une température de 357°C, échangeant sa chaleur avec le gaz de synthèse, lequel entrant à la température de 380°C ressort à la même température malgré l'exothermicité de la réaction de conversion ; la quantité de chaleur devant être fournie au reformage par le GN combustible est moindre, sa consommation est donc diminuée ;
- la préchauffe du résiduaire de PSA entraîne une augmentation du rendement thermique du four de reformage (51.3% au lieu de 49.8%, soit une augmentation de 1.5%), diminuant ainsi encore plus la quantité de chaleur devant être fournie et la consommation de GN combustible ;
- le gaz de synthèse en sortie du réacteur de conversion est à une température très inférieure à celle du gaz de synthèse en sortie du réacteur de conversion adiabatique du procédé conventionnel (380°C au lieu de 428°C, soit environ 50°C plus basse), cela témoigne de la stabilisation de la température dans le réacteur de conversion, laquelle permet d'améliorer le rendement de la réaction de conversion; en conséquence, le débit de GN procédé nécessaire pour une même production d'hydrogène est donc diminué ;

Le [Tableau 3] représente les performances comparées du procédé de l'invention selon [Fig 3] obtenues par simulation, et du même procédé conventionnel mettant en œuvre un réacteur de shift adiabatique que dans [Tableau 1]. Dans les deux cas, on a la même la production d'hydrogène de 5800 kmol/h d'hydrogène, et la même composition de gaz de synthèse entrant dans le réacteur : 49.3% H₂, 10.2% CO, 5.2% CO₂, 32.2% H₂O, 0.3% N₂, 2.8% CH₄

**[Tableau 3]**

| | R.adiabatique A | R.isotherme I | Variation (I-A)/A |
|---|---|---|---|
| Temp entrée T_{E} (°C) | 360 | 370 | |
| Temp sortie T_{S} (°C) | 428 | 380 | |
| Teneur en CO en sortie de réacteur | 3.33 | 2.28 | |
| Temp résiduaire PSA (°C) | 35 | 360 | |
| Conso GN proceed | 1972 | 1933 | -2.0% |
| Conso GN combustible | 296 | 261 | -11.8% |
| Conso totale GN | 2268 | 2194 | -3.3% |
| Rendement therm du four SMR (%) | 49.8 | 51.3 | |
| Production Vapeur en excès (t/h) | 73 | 60 | -18.0% |
| CO2 émis (kmol/h) | 2479 | 2395 | -3.4% |

Les données présentées montrent que :
- le résiduaire de PSA initialement à la température de 35°C est préchauffé jusqu'à une température de 360°C par échange de chaleur avec le gaz de synthèse ayant quitté le réacteur de conversion à une température de 380°C;
- la préchauffe du résiduaire de PSA entraîne une augmentation du rendement thermique du four de reformage (51.3% au lieu de 49.8%, soit une augmentation de 1.5%), diminuant ainsi encore plus la quantité de chaleur devant être fournie et la consommation de GN combustible ;
- le gaz de synthèse en sortie du réacteur de conversion est à une température très inférieure à celle du gaz de synthèse en sortie du réacteur de conversion adiabatique du procédé conventionnel (380°C au lieu de 428°C, soit environ 50°C plus basse), cela témoigne de la stabilisation de la température dans le réacteur de conversion, laquelle permet d'améliorer le rendement de la réaction de conversion; en conséquence, le débit de GN procédé nécessaire pour une même production d'hydrogène est donc diminué .

Au vu de ces tableaux, on constate que les deux configurations selon l'invention présentent toutes deux des avantages comparables:
- réduction à la fois des consommations de GN procédé et de GN combustible; pour une production donnée, la consommation de GN procédé est réduite grâce à une conversion améliorée dans le réacteur refroidi pour la réaction du gaz à l'eau tandis que la consommation de GN combustible est réduite grâce à un choix judicieux du fluide de refroidissement utilisé pour évacuer la chaleur produite par la réaction de conversion hors du réacteur de conversion ;
- cette dernière étant liée à la préchauffe du résiduaire de PSA, elle entraîne une augmentation du rendement thermique du four de reformage, diminuant ainsi encore la quantité de chaleur devant être fournie et la consommation de GN combustible ; cela signifie donc une réduction plus importante de la consommation de gaz naturel totale comparée aux solutions connues;

Les deux solutions proposées par l'invention sont avantageuses :
- d'une part en terme de fonctionnement amélioré du reformage, comme le montrent les Tableaux 2 et 3, avec diminution de la consommation d'hydrocarbures, et amélioration du rendement thermique du four de reformage ;
- d'autre part parce que le réacteur de shift fonctionnant à une température plus basse, le frittage du catalyseur sera réduit, augmentant ainsi sa durée de vie.

D'autres critères permettront de privilégier l'une ou l'autre solution suivant les cas.

La solution qui utilise le résiduaire PSA comme fluide caloporteur dans le réacteur est plus favorable dans le cadre d'une modernisation d'unité existante car elle induit moins de modifications de l'existant:
- la tuyauterie du système de préchauffe de gaz naturel est inchangée;
- l'échangeur de préchauffe de gaz naturel pourrait rester identique ou nécessiter l'ajout de quelques tubes suivant son dimensionnement;
- l'intégration mécanique de l'unité subit peu de modifications hormis pour les conduites transportant le résiduaire de PSA.

La solution qui utilise le gaz naturel comme fluide caloporteur dans le réacteur serait privilégiée dans le cadre de la construction d'une nouvelle unité car l'opération de l'unité sera facilitée pour les raisons suivantes:
- la séquence de démarrage est simplifiée : le fluide caloporteur de cette solution est disponible dès le démarrage alors que le résiduaire PSA (fluide caloporteur de la solution de la figure 2) ne l'est pas (il faut d'abord démarrer toute la chaîne en amont du PSA incluant le réacteur de conversion). Cela signifie que cette solution permet le démarrage direct du réacteur de conversion en mode refroidi;
- pour la même raison, en cas de défaillance totale ou partielle du PSA, l'opération du réacteur de conversion ne sera pas impactée, contrairement à la solution faisant appel au résiduaire PSA pour son refroidissement.

L'invention présente donc de nombreux avantages par rapport à l'art antérieur et à la pratique de l'homme du métier, parmi lesquels ceux déjà cités:
- un réacteur gardant la température plus stable - refroidi, idéalement isotherme - permet d'augmenter la conversion, et donc permet pour une production d'hydrogène donnée, de diminuer la consommation de gaz naturel procédé;
- l'utilisation de la chaleur produite par la conversion pour chauffer des fluides alimentant le reformage diminue significativement la consommation totale en hydrocarbures;
- l'utilisation/évacuation judicieuse de la chaleur du réacteur via la préchauffe des résidus de l'unité PSA permet d'une part d'apporter une partie de l'énergie nécessaire au reformage et d'autre part d'augmenter le rendement thermique du four de vaporeformage.

De cette invention découlent aussi des améliorations au niveau de l'installation considérée dans son environnement, parmi lesquelles:
- la consommation de gaz naturel diminuant, les émissions de CO₂ vont se trouver diminuées;
- le rendement thermique du four augmente, la chaleur est mieux utilisée en interne, la production de vapeur en excès va donc être diminuée.

## Revendications

1. Procédé de production d'hydrogène à partir d'une source d'hydrocarbures légers comprenant au moins:
a. une étape (a) de génération d'un gaz de synthèse par reformage à la vapeur desdits hydrocarbures gazeux légers comprenant au moins une étape (a1) de désulfuration desdits hydrocarbures à reformer, une étape optionnelle de pré-reformage des hydrocarbures désulfurés, une étape de reformage à la vapeur des hydrocarbures désulfurés, et optionnellement pré-reformés, dans des réacteurs tubulaires installés dans le four d'un reformeur chauffé par des brûleurs alimentés en combustible par au moins du gaz combustible secondaire comprenant tout ou partie du mélange gazeux résiduaire produit lors de l'étape de production d'hydrogène (b) du procédé et du gaz combustible primaire prélevé préférentiellement sur la source d'hydrocarbures gazeux légers,
b. une étape (b) de production d'hydrogène à partir du gaz de synthèse généré lors de l'étape (a), comprenant au moins une étape (b1) d'enrichissement en hydrogène du gaz de synthèse par conversion du monoxyde de carbone selon la réaction exothermique de conversion CO + H₂O → CO₂ + H₂, une étape (b2) de purification du gaz de synthèse dans une unité d'adsorption par cycles de pression pour obtenir un produit H₂ pur et un mélange gazeux résiduaire contenant CH₄, CO, H₂ et CO₂,
**caractérisé en ce que** la réaction de conversion de l'étape (b1) est mise en œuvre dans un réacteur de conversion refroidi dans lequel une partie de la chaleur produite lors de l'étape (b1) est transférée par échange de chaleur indirect dans le réacteur avec un premier fluide gazeux pour le préchauffer préalablement à son utilisation dans l'étape (a) de génération du gaz de synthèse et **en ce que** le gaz de synthèse enrichi en hydrogène (216, 316) quittant le réacteur de conversion est refroidi par échange de chaleur indirect avec un second fluide gazeux préalablement à son utilisation dans l'étape (a).

2. Procédé selon la revendication 1 **caractérisé en ce que** le gaz de synthèse (212, 312) entrant à une température T_{E} dans le réacteur de conversion (213, 313), le gaz de synthèse enrichi en hydrogène (216, 316) quitte le réacteur refroidi à une température Ts inférieure à T_{E} + 40°C, préférentiellement inférieure à T_{E} + 30°C, plus préférentiellement inférieure à T_{E} +10°C.

3. Procédé selon la revendication 1 ou la revendication 2 dans lequel le premier fluide gazeux à préchauffer est le mélange gazeux résiduaire alimentant les brûleurs du reformeur et le second fluide gazeux à préchauffer est constitué par les hydrocarbures légers à reformer.

4. Procédé selon la revendication 1 ou la revendication 2 dans lequel le premier fluide gazeux à préchauffer est constitué par les hydrocarbures légers à reformer (318) et le second fluide gazeux à préchauffer est le mélange gazeux résiduaire (307a) alimentant les brûleurs du reformeur.

5. Procédé selon l'une des revendications précédentes **caractérisé en ce que** pour une production d'hydrogène et des conditions opératoires similaires par ailleurs, la consommation totale en hydrocarbures légers est diminuée d'au moins 1%, de préférence d'au moins 2%, plus préférentiellement encore d'au moins 3% par rapport à un procédé utilisant un réacteur de conversion adiabatique.

6. Réacteur de conversion refroidi apte à la mise en œuvre du procédé tel que défini selon l'une des revendication 1 à 5 **caractérisé en ce qu'**il est du type plaques et ondes et équipé de moyens d'admission du premier fluide à préchauffer préalablement à son utilisation dans l'étape (a), de moyens internes au réacteur pour la circulation dudit premier fluide à préchauffer et pour l'échange de chaleur avec le gaz de synthèse à refroidir et de moyens de sortie dudit premier fluide préchauffé.

7. Réacteur de conversion refroidi apte à la mise en œuvre du procédé tel que défini selon l'une des revendication 1 à 5 **caractérisé en ce qu'**il est du type tubes et calandre et équipé de moyens d'admission du premier fluide à préchauffer préalablement à son utilisation dans l'étape (a), de moyens internes au réacteur adaptés pour la circulation dudit premier fluide à préchauffer dans les tubes et pour la circulation du gaz de synthèse dans la calandre munie de catalyseur et pour l'échange de chaleur avec le gaz de synthèse à refroidir et de moyens de sortie dudit premier fluide préchauffé.

8. Installation apte à la mise en œuvre du procédé de l'invention selon l'une quelconque des revendications 1 à 5 **caractérisée en ce qu'**elle est équipée d'un réacteur de conversion refroidi selon l'une des revendications 6 ou 7, ainsi que de moyens aptes à véhiculer ledit premier fluide à préchauffer préalablement à son utilisation dans l'étape (a) et à assurer son amenée au dit réacteur et de moyens aptes à véhiculer ledit premier fluide préchauffé depuis sa sortie dudit réacteur jusqu'à son lieu d'utilisation au niveau du reformage.

## Patentansprüche

1. Verfahren zur Herstellung von Wasserstoff ausgehend von einer Quelle leichtflüchtiger Kohlenwasserstoffe, zumindest Folgendes umfassend:
a. einen Schritt (a) des Erzeugens eines Synthesegases durch Dampfreformierung der leichtflüchtigen gasförmigen Kohlenwasserstoffe, wobei er zumindest einen Schritt (a1) des Entschwefelns der zu reformierenden Kohlenwasserstoffe, möglicherweise einen Schritt des Vorreformierens der entschwefelten Kohlenwasserstoffe, einen Schritt des Dampfreformierens der entschwefelten und möglicherweise vorreformierten Kohlenwasserstoffe in Rohrreaktoren umfasst, welche im Ofen einen Reformers angeordnet sind, der durch Brenner beheizt wird, welche zumindest durch sekundäres brennbares Gas, das die Gesamtheit oder einen Teil der verbleibenden Gasmischung umfasst, wie sie im Schritt (b) des Herstellens von Wasserstoff des Verfahrens anfällt, und durch primäres brennbares Gas, wie es vorzugsweise aus der Quelle leichtflüchtiger gasförmiger Kohlenwasserstoffe entnommen wird, mit Brennstoff versorgt werden,
b. einen Schritt (b) des Herstellens von Wasserstoff ausgehend von dem Synthesegas, welches im Schritt (a) erzeugt wurde, wobei er zumindest einen Schritt (b1), in welchem das Synthesegas durch Umwandlung des Kohlenmonoxids gemäß der exothermen Umwandlungsreaktion CO + H₂O → CO₂ + H₂ an Wasserstoff angereichert wird, einen Schritt (b2) umfasst, in welchem das Synthesegas in einer Absorptionseinheit mittels Druckzyklen aufgereinigt wird, um ein reines H₂-Produkt sowie und eine verbleibende Gasmischung zu erhalten, welche CH₄, CO, H₂ und CO₂ enthält,
**dadurch gekennzeichnet, dass** die Umwandlungsreaktion des Schrittes (b1) in einem gekühlten Umwandlungsreaktor durchgeführt wird, in welchem ein Teil der Wärme, wie sie im Schritt (b1) erzeugt wird, durch indirekten Wärmeaustausch in den Reaktor mit einem ersten gasförmigen Fluid überführt wird, um dieses vorzuheizen, bevor es im Schritt (a) des Erzeugens des Synthesegases verwendet wird, und dadurch, dass das an Wasserstoff angereicherte Synthesegas (216, 316), welches des Umwandlungsreaktor verlässt, durch indirekten Wärmeaustausch mit einem zweiten gasförmigen Fluid gekühlt wird, bevor es im Schritt (a) verwendet wird.

2. Verfahren nach Anspruch 1, **dadurch gekennzeichnet, dass** das Synthesegas (212, 312), welches mit einer Temperatur T_{E} in den Umwandlungsreaktor (213, 313) eintritt, das an Wasserstoff angereicherte Synthesegas (216, 316) den gekühlten Reaktor mit einer Temperatur T_{S} verlässt, welche niedriger als T_{E} + 40 °C, vorzugsweise niedriger als T_{E} + 30 °C, stärker bevorzugt niedriger als T_{E} + 10 °C ist.

3. Verfahren nach Anspruch 1 oder Anspruch 2, wobei es sich bei dem vorzuheizenden gasförmigen ersten Fluid um die verbleibende Gasmischung handelt, mit welcher die Brenner des Reformers versorgt werden, und das vorzuheizende zweite gasförmige Fluid aus den zu reformierenden leichtflüchtigen Kohlenwasserstoffen besteht.

4. Verfahren nach Anspruch 1 oder Anspruch 2, wobei das vorzuheizende gasförmigen erste Fluid aus den zu reformierenden leichtflüchtigen Kohlenwasserstoffen (318) besteht, und es sich bei dem vorzuheizenden gasförmigen zweiten Fluid um die verbleibende Gasmischung (307a) handelt, mit welcher die Brenner des Reformers versorgt werden.

5. Verfahren nach einem der vorhergehenden Ansprüche, **dadurch gekennzeichnet, dass** für eine Wasserstoffproduktion und für Betriebsbedingungen, die anderweitig von ähnlicher Beschaffenheit sein, sich der Gesamtverbrauch an leichtflüchtigen Kohlenwasserstoffen um mindestens 1 %, vorzugsweise um mindestens 2 %, noch stärker bevorzugt um mindestens 3 % verringert, bezogen auf ein Verfahren, bei welchem ein adiabatischer Umwandlungsreaktor verwendet wird.

6. Gekühlter Umwandlungsreaktor, mittels dessen das Verfahren gemäß der Begriffsbestimmung in einem der Ansprüche 1 bis 5 umgesetzt werden kann, **dadurch gekennzeichnet, dass** er von der Bauart mit Wellenprofilplatten ist, wobei er mit Mitteln zum Einleiten des ersten Fluids, welches im Vorfeld seiner Verwendung im Schritt (a) vorgeheizt werden soll, mit Mitteln, welche sich im Reaktor befinden, um eine Strömung des vorzuheizenden ersten Fluids zu bewirken und um einen Wärmeaustausch mit dem abzukühlenden Synthesegas zu bewirken, und mit Mitteln zum Abführen des vorgeheizten ersten Fluids versehen ist.

7. Gekühlter Umwandlungsreaktor, mittels dessen das Verfahren gemäß der Begriffsbestimmung in einem der Ansprüche 1 bis 5 umgesetzt werden kann, **dadurch gekennzeichnet, dass** er von der Bauart mit Rohrbündeln ist, wobei er mit Mitteln zum Einleiten des ersten Fluids, welches im Vorfeld seiner Verwendung im Schritt (a) vorgeheizt werden soll, mit Mitteln, welche sich im Reaktor befinden und dafür geeignet sind, eine Strömung des vorzuheizenden ersten Fluids im Rohrbündelinnenraum zu bewirken und eine Strömung des Synthesegases im Rohrbündelaußenraum, welcher mit einem Katalysator versehen ist, zu bewirken und einen Wärmeaustausch mit dem abzukühlenden Synthesegas zu bewirken, und mit Mitteln zum Abführen des vorgeheizten ersten Fluids versehen ist.

8. Anlage, mittels welcher das Verfahren der Erfindung nach einem beliebigen der Ansprüche 1 bis 5 durchgeführt werden kann, **dadurch gekennzeichnet, dass** sie mit einem gekühlten Umwandlungsreaktor nach einem der Ansprüche 6 oder 7 sowie mit Mitteln, die dafür geeignet sind, das vorzuheizende erste Fluid im Vorfeld seiner Verwendung im Schritt (a) zu befördern und sicherzustellen, dass es zum Reaktor gelangt, und mit Mitteln versehen ist, die dafür geeignet sind, das vorgeheizte erste Fluid, nachdem dieses den Reaktor verlassen hat, zu seiner Verwendung im Bereich der Reformierung zu befördern.

## Claims

1. Process for producing hydrogen from a light hydrocarbon source, comprising at least:
a. a step (a) of generating a synthesis gas by steam reforming of said light gaseous hydrocarbons, comprising at least a step (a1) of desulfurizing said hydrocarbons for reforming, an optional step of pre-reforming the desulfurized hydrocarbons, a step of steam-reforming the desulfurized and optionally pre-reformed hydrocarbons in tubular reactors installed in the furnace of a reformer heated by burners which are fed with fuel by at least secondary fuel gas, comprising some or all of the residual gas mixture produced in the hydrogen production step (b) of the process, and primary fuel gas, withdrawn preferably from the light gaseous hydrocarbon source,
b. a step (b) of producing hydrogen from the synthesis gas generated in step (a), comprising at least a step (b1) of hydrogen-enriching the synthesis gas by conversion of carbon monoxide according to the exothermic conversion reaction CO + H₂O → CO₂ + H₂, a step (b2) of purifying the synthesis gas in a pressure swing adsorption unit to give a pure H₂ product and a residual gas mixture containing CH₄, CO, H₂ and CO₂,
**characterized in that** the conversion reaction of step (b1) is carried out in a cooled conversion reactor in which some of the heat produced in step (b1) is transferred by indirect heat exchange in the reactor with a first gaseous fluid so as to preheat this fluid before it is used in the synthesis gas generation step (a), and **in that** the hydrogen-enriched synthesis gas (216, 316) leaving the conversion reactor is cooled by indirect heat exchange with a second gaseous fluid before it is used in step (a).

2. Process according to Claim 1, **characterized in that**, with the synthesis gas (212, 312) entering the conversion reactor (213, 313) at a temperature T_{E}, the hydrogen-enriched synthesis gas (216, 316) leaves the reactor cooled to a temperature T_{S} of less than T_{E} + 40°C, preferably less than T_{E} + 30°C, more preferably less than T_{E} + 10°C.

3. Process according to Claim 1 or Claim 2, wherein the first gaseous fluid for preheating is the residual gas mixture feeding the burners of the reformer, and the second gaseous fluid for preheating is composed of the light hydrocarbons for reforming.

4. Process according to Claim 1 or Claim 2, wherein the first gaseous fluid for preheating is composed of the light hydrocarbons for reforming (318), and the second gaseous fluid for preheating is the residual gas mixture (307a) feeding the burners of the reformer.

5. Process according to any of the preceding claims, **characterized in that**, for a hydrogen production level and operating conditions which are otherwise similar, the total consumption of light hydrocarbons is decreased by at least 1%, preferably at least 2%, more preferably still at least 3% relative to a process employing an adiabatic conversion reactor.

6. Cooled conversion reactor suitable for implementation of the process as defined in any of Claims 1 to 5, **characterized in that** it is a plate-and-corrugated sheet reactor and equipped with means for admitting the first fluid for preheating before it is used in step (a), with reactor-internal means for circulating said first fluid for preheating and for heat exchange with the synthesis gas for cooling, and with means for exit of said preheated first fluid.

7. Cooled conversion reactor suitable for implementation of the process as defined in any of Claims 1 to 5, **characterized in that** it is a shell-and-tube reactor and equipped with means for admitting the first fluid for preheating before it is used in step (a), with reactor-internal means adapted for circulating said first fluid for preheating in the tubes and for circulating the synthesis gas in the catalyst-filled shell and for heat exchange with the synthesis gas for cooling, and with means for exit of said preheated first fluid.

8. Plant suitable for implementing the process of the invention according to any of Claims 1 to 5, **characterized in that** it is equipped with a cooled conversion reactor according to either of Claims 6 and 7, and also with means suitable for conveying said first fluid for preheating before it is used in step (a) and for bringing it to the said reactor, and with means suitable for conveying said first preheated fluid from its exit from said reactor to the location of its use at the reforming stage.
